# EUROPEAN PATENT SPECIFICATION

(11) **EP 2 249 656 B1**
(45) Date of publication and mention of the grant of the patent: **22.06.2011**
(21) Application number: 09708615.1
(22) Date of filing: 04.02.2009
(51) Int. Cl.: A23F 3/00, A23F 3/16

(54) **PROCESS FOR MANUFACTURING A TEA PRODUCT**
VERFAHREN ZUR HERSTELLUNG EINES TEEPRODUKTS
PROCÉDÉ POUR FABRIQUER UN PRODUIT DE THÉ

(30) Priority: 07.02.2008 EP 08151155; 23.12.2008 EP 08172694
(43) Date of publication of application: 17.11.2010
(73) Proprietor: Unilever PLC, A Company Registered In England And Wales under company no. 41424 of Unilever House, London EC4Y 0DY (GB); Unilever N.V., 3013 AL Rotterdam (NL)
(72) Inventor: COLLIVER, Steven, Peter, Jebel Ali FZE, Dubai (AE); SHARP, David, George, Sharnbrook Bedfordshire MK44 1LQ (GB)
(74) Representative: Keenan, Robert Daniel
(86) International application number: PCT/EP2009/051271
(87) International publication number: WO 2009/098231

(56) References cited:
- WO-A-2004/002235
- GB-A- 968 423
- DATABASE WPI Week 200731 Thomson Scientific, London, GB; AN 2007-318138 XP002519695 & JP 2007 082526 A (OBATA H) 5 April 2007 (2007-04-05) cited in the application

## Description

### TECHNICAL FIELD OF THE INVENTION

The present invention relates to a process for manufacturing a tea product. In particular, the present invention relates to a process for manufacturing a tea product wherein tea juice is combined with made tea.

### BACKGROUND TO THE INVENTION

Beverages based on the tea plant (*Camellia sinensis*) have been popular throughout the world for many hundreds of years. Traditionally such beverages are produced by infusing leaf tea in hot water.

Leaf teas, of whatever type, are normally constrained in terms of their properties by the location of their production, which usually limits the choice of tea varieties, agronomy and the manufacturing process used.

Today tea-based beverages can be prepared by methods other than infusing leaves in hot water and served in ways other than poured from tea pots. For example they can be made with concentrates or powders that are mixed with hot water in vending machines or used to prepare ready-to-drink teas in cans and bottles. Consumers also demand more from tea such as accelerated infusion, more colour and/or more aroma.

There is therefore a need for a method for making a tea product that allows one to tailor the physico-chemical properties of the final product to the customer's requirements after manufacture on a tea plantation and, if necessary break traditional rules of tea manufacture to deliver teas with specific properties, modified flavour attributes or for specific product application.

WO 2004/002235 (Unilever) discloses a method for preparing a fabricated leaf tea product comprising mixing leaf tea with tea solids derived from tea powders, the method being characterised in that the mixture of tea leaves and tea powder is simultaneously wetted and dried. The resulting product has enhanced quality and speed of infusion compared with conventional leaf teas.

We have now found that juice expressed from fresh tea leaves can be used to tailor the properties of made tea. Furthermore, we have found that tea juice has a composition different to that of conventional tea extracts and so allows for the manipulation of the physico-chemical properties of made tea in new directions.

GB 968,423 A (ALEXANDER MAURICE HUGO BAKE) discloses producing tea juice from fresh tea leaves which have been sujected to all, or a selected sequence, of the operations of withering, bruising, twisting, fermentation and killing or inactivation of enzymes but not to drying, the juice is separated from the resulting moist leaves, as by mangling, pressing or extraction, and, if desired is then clarified and stabilized by the addition of a preservative, such as benzoic acid.

JP 2007/082526 A (OBATA HIDEYUKI) discloses a method for producing unrefined tea, comprising taking out part of tea leaves followed by squeezing before a process of heating and rolling pressure treatment of tea leaves to lower moisture content is finished, scattering squeezed juice on tea leaves before heating and rolling pressure treatment are finished, and continuing a tea manufacturing process. This document does not disclose combining the tea juice with leaf tea (i.e. made tea) but instead teaches that the juice must be added before heating and rolling pressure treatment (e.g. rolling/twisting) are finished in order that chemical reactions can take place in the juice such that the ratio of the amounts of components is similar to that of conventional tea.

### DEFINITIONS

### Tea

"Tea" for the purposes of the present invention means material from *Camellia sinensis* var. *sinensis* and/or *Camellia sinensis* var. *assamica.* Especially preferred is material from var. *assamica* as this has a higher level of tea actives than var. *sinensis.*

"Leaf tea" for the purposes of this invention means a tea product that contains tea leaves and/or stem in an uninfused form, and that has been dried to a moisture content of less than 30% by weight, and usually has a water content in the range 1 to 10% by weight (i.e. "made tea").

"Green tea" refers to substantially unfermented tea. "Black tea" refers to substantially fermented tea. "Oolong tea" refers to partially fermented tea.

"Fermentation" refers to the oxidative and hydrolytic process that tea undergoes when certain endogenous enzymes and substrates are brought together, e.g., by mechanical disruption of the cells by maceration of the leaves. During this process colourless catechins in the leaves are converted to a complex mixture of yellow and orange to dark-brown polyphenolic substances.

"Fresh tea leaves" refers to tea leaves and/or stem that have never been dried to a water content of less than 30% by weight, and usually have a water content in the range 60 to 90%.

### Expressing Juice

As used herein the term "expressing juice" refers to squeezing out juice from fresh tea leaves using physical force, as opposed to extraction of tea solids with the use of a solvent. Thus the term "expressing" encompasses such means as squeezing, pressing, wringing, spinning and extruding. It is possible that a small amount of solvent (e.g. water) is added to the fresh leaves during the expression step. However, in order to prevent significant extraction of tea solids by the solvent, the moisture content of the leaves during expression is that of fresh tea leaves as defined hereinabove. In other words, during the expression step, the moisture content of the tea leaves is between 30 and 90% by weight, more preferably between 60 and 90%. It is also preferred that the fresh leaves are not contacted with non-aqueous solvent (e.g. alcohols) prior to or during expression, owing to the environmental & economic problems associated with such solvents.

### Beverage

As used herein the term "beverage" refers to a substantially aqueous drinkable composition suitable for human consumption.

### Catechins

As used herein the term "catechins" is used as a generic term for catechin, gallocatechin, catechin gallate, gallocatechin gallate, epicatechin, epigallocatechin, epicatechin gallate, epigallocatechin gallate, and mixtures thereof. The catechins are sometimes referred to using the following shorthand notation: C for catechin, GC for gallocatechin, CG for catechin gallate, GCG for gallocatechin gallate, EC for epicatechin, EGC for epigallocatechin, ECG for epicatechin gallate, and EGCG for epigallocatechin gallate. The term "gallated catechins" is used as a generic term for CG, ECG, GCG, EGCG and mixtures thereof. The term "non-gallated catechins" is used as a generic term for C, GC, EC, EGC and mixtures thereof.

### Theaflavins

As used herein the term "theaflavins" is used as a generic term for theaflavin, theaflavin-3-gallate, theaflavin-3'-gallate, theaflavin-3,3'-digallate and mixtures thereof. The structures of these compounds are well-known (see, for example, structures xi-xiv in Chapter 17 of "Tea - Cultivation to consumption", K.C. Willson and M.N. Clifford (Eds), 1992, Chapman & Hall, London, pp.555-601). The theaflavins are sometimes referred to using the shorthand notation TF1-TF4 wherein TF1 is theaflavin, TF2 is theaflavin-3-gallate, TF3 is theaflavin-3'-gallate and TF4 is theaflavin-3,3'-digallate (or simply "theaflavin digallate"). The term "gallated theaflavins" is used as a generic term for TF2, TF3, TF4 and mixtures thereof.

### Leaf Size and Grade

For the purposes of the present invention, leaf particle size is characterised by sieve mesh size using the following convention:
- Tyler mesh sizes are used throughout.
- A "+" before the sieve mesh indicates the particles are retained by the sieve.
- A "-" before the sieve mesh indicates the particles pass through the sieve.

For example, if the particle size is described as -5 +20 mesh, then the particles will pass through a 5 mesh sieve (particles smaller than 4.0 mm) and be retained by a 20 mesh sieve (particles larger than 841 µm).

Leaf particle size may additionally or alternatively be characterized using the grades listed in the international standard ISO 6078-1982. These grades are discussed in detail in our European patent specification EP 1 365 657 B1 (especially paragraph [0041] and Table 2) which is hereby incorporated by reference.

### SUMMARY OF THE INVENTION

We have surprisingly found that tea juice expressed from fresh tea leaf has a composition different to that of conventional tea extracts and so allows for the manipulation of the physico-chemical properties of made tea in new directions.

Thus in a first aspect, the present invention provides a process comprising the step of combining tea juice expressed from a first supply of fresh tea leaves with leaf tea from a second supply of fresh tea leaves and/or with tea solids extracted from the leaf tea.

Without wishing to be bound by theory, we believe that tea juice has a relatively low level of gallated polyphenols and/or caffeine and can thus be combined with made tea to increase the tea solids thereof without excessively increasing negative properties, such as bitterness, associated with gallated polyphenols and/or caffeine. Furthermore the tea juice is found to have a unique taste which, when combined with the taste of made tea, produces tea beverages with unexpectedly high consumer liking.

The tea products obtained by the process of the invention therefore have a novel composition which is intermediate between that of conventional made tea and tea juice. Thus in a second aspect, the present invention provides a tea product obtainable and/or obtained by the process of the first aspect.

### DETAILED DESCRIPTION

### Obtaining the Tea Juice

The tea juice for use in the present invention is expressed from a first supply of fresh tea leaves. The expression step also produces leaf residue which is separated from the tea juice, e.g. by filtering and/or centrifugation.

If the amount of juice expressed is too low then it becomes difficult to separate the juice from the leaf residue and/or leads to an inefficient process. Thus it is preferred that the amount of expressed juice is at least 10 ml per kg of the fresh tea leaves, more preferably at least 25 ml, more preferably still at least 50 ml and most preferably from 75 to 600 ml. When referring to the volume of juice expressed per unit mass of tea leaves it should be noted that the mass of the tea leaves is expressed on an "as is" basis and not a dry weight basis. Thus the mass includes any moisture in the leaves.

The expression step can be achieved in any convenient way so long as it allows for separation of the tea juice from the leaf residue and results in the required quantity of juice. The machinery used to express the juice may, for example, include a hydraulic press, a pneumatic press, a screw press, a belt press, an extruder or a combination thereof.

The juice may be obtained from the fresh leaves in a single pressing or in multiple pressings of the fresh leaves. Preferably the juice is obtained from a single pressing as this allows for a simple and rapid process.

In order to minimise degradation of the valuable tea compounds, it is preferred that the expression step is performed at ambient temperature. For example, the leaf temperature may be from 5 to 40°C, more preferably 10 to 30°C.

The time and pressure used in the expression step can be varied to yield the required amount of juice. Typically, however, the pressures applied to express the juice will range from 0.5 MPa (73 psi) to 10 MPa (1450 psi). The time over which the pressure is applied will typically range from 1 s to 1 hour, more preferably from 10 s to 20 minutes and most preferably from 30 s to 5 minutes.

Prior to expression, the fresh tea leaves may undergo a pre-treatment including, for example, a unit process selected from heat treatment to deactivate fermentation enzymes, maceration, withering, fermentation or a combination thereof.

If green tea juice is desired it is preferred that the fresh leaves are heat treated to deactivate fermentation enzymes prior to expression. Suitable heat treatments include steaming and/or pan-frying.

If black or oolong tea juice is desired it is preferred that the fresh leaves are not heat treated to deactivate fermentation enzymes prior to expression. The fresh leaves may or may not be fermented prior to expression. If the leaves are fermented prior to expression then it is particularly preferred that they are macerated prior to fermentation.

The tea juice for use in the present invention is found to be unexpectedly low in gallated polyphenols. For green tea juice this is apparent from the weight ratio of non-gallated to gallated catechins in the juice. The green tea juice may, for example, have a weight ratio of non-gallated catechins to gallated catechins of greater than 1.4:1, more preferably greater than 1.6:1, more preferably still greater than 1.8:1 and most preferably from 3:1 to 20:1. For black tea juice this is apparent from the weight ratio of theaflavin (TF1) to theaflavin digallate (TF4). Preferably TF1/TF4 in the black tea juice is at least 2.0, more preferably at least 3.0, more preferably still at least 3.2 and most preferably from 3.5 to 5.0. Additionally or alternatively the amount of TF1 in the total theaflavins in the juice is preferably at least 40% by weight, more preferably at least 42% by weight and most preferably from 45 to 60% by total weight of the theaflavins.

Whether or not the fresh leaves are fermented, maceration prior to expression may help in decreasing the time and/or pressure required to express the desired quantity of juice. Surprisingly, however, we have found that excessive damage to the fresh tea leaves prior to expression can result in a lowering of the weight ratio of non-gallated to gallated polyphenols in the expressed juice. Therefore in a preferred embodiment the fresh leaves are not subjected to a maceration and/or freeze-thaw process prior to or during the expression step.

### Combining the Tea Juice with Made Tea

The tea juice is combined with leaf tea from a second supply of fresh tea leaves and/or with tea solids extracted from the leaf tea.

The leaf tea may be any type of tea including, black, green or oolong. The manufacturing processes for producing leaf tea from fresh tea leaves are well-known and suitable processes are described, for example, in Chapters 13 & 14 of "Tea - Cultivation to consumption" (K.C. Willson and M.N. Clifford (Eds), 1992, Chapman & Hall, London) which are hereby incorporated by reference in their entirety. In the case of oolong leaf tea and black leaf tea, processing the second supply of tea leaves comprises a step of fermenting the fresh tea leaves. A step common to manufacture of all leaf teas is a drying step. In the case of oolong and black leaf tea, the drying step usually also serves to deactivate the fermentation enzymes. Efficient drying requires high temperatures and so it is preferred that processing the second supply of fresh tea leaves comprises drying the fresh tea leaves at a temperature of at least 75°C, more preferably at least 90°C.

In one embodiment, the process of the invention is used to manufacture a leaf tea product with increased amounts of water-soluble tea solids, thus allowing for increased speed of infusion of the leaf tea product. A convenient way of manufacturing such a product is by combining the tea juice (or a fraction thereof) with the leaf tea to form a mixture and then drying the mixture. The mixture is preferably dried to a water content of less than 30% by weight of the mixture, more preferably to a water content in the range of 1 to 10% by weight. Conveniently the tea juice may be sprayed onto the leaf tea to form the mixture. Additionally or alternatively the mixture may be dried in a fluid bed drier.

In another embodiment, the process of the invention is used to manufacture a ready-to-drink beverage, a tea powder or a tea concentrate having improved properties, such as lower bitterness, by combining the juice with tea solids extracted from a leaf tea. For example, the juice (or a fraction thereof) may be combined with a powder or liquid concentrate comprising the tea solids extracted from the leaf tea. Additionally or alternatively the tea juice (or a fraction thereof) may be combined with a tea beverage comprising the tea solids extracted from the leaf tea.

The tea juice may be combined with the leaf tea and/or with tea solids extracted from the leaf tea in any amount. We have found however, that particularly desirable tea products can be prepared when the tea juice is combined with the leaf tea and/or with tea solids extracted from the leaf tea such that the resulting tea product comprises soluble tea solids derived from each supply of tea in roughly equal amounts. Thus it is preferred that the combination results in a tea product wherein the weight ratio of water-soluble tea solids derived from the tea juice to water-soluble tea solids derived from the leaf tea is in the range 5:1 to 1:5, more preferably 2:1 to 1:2 and most preferably 1.5:1 to 1:1.5.

The tea juice may be combined with the leaf tea and/or with the solids extracted from the leaf tea without any processing of the juice following expression. Alternatively, for example, the juice may be subjected to a concentration and/or dilution step prior to the combination step.

By blending different types of juice with different types of leaf, novel and interesting flavour combinations may be achieved without undue bitterness. For example black juice could be combined with black leaf tea or green leaf tea. Alternatively, green tea juice could be combined with green leaf tea or black leaf tea.

### Processing the Leaf Residue

In order to maximise the efficiency of the process it is preferred that the leaf residue is not discarded but is further processed to produce a commercially viable product. In a particularly preferred embodiment, the process comprises an additional step wherein the leaf residue is processed to produce leaf tea.

We have surprisingly found that if the amount of juice expressed is below 300 ml per kg of fresh leaves, the leaf residue can be processed to make leaf tea of at least conventional quality despite the fact that the leaf residue after expression has a lower overall level of tea compounds such as polyphenols and amino acids. In general, the quality of the final leaf tea (e.g. in terms of infusion performance) is better the less juice expressed. Thus it is preferred that the amount of juice expressed in step (a) is less than 300 ml per kg of tea leaves, more preferably less than 275 ml, more preferably still less than 250 ml and most preferably less than 225 ml.

The leaf residue may be processed to produce green leaf tea, black leaf tea or oolong leaf tea. In the case of oolong leaf tea and black leaf tea the process comprises fermenting the leaf residue.

The manufacturing processes of green leaf tea, black leaf tea and oolong leaf tea are well known and suitable processes are described, for example, in "Tea: Cultivation to Consumption", K.C. Willson and M.N. Clifford (Eds), 1st Edn, 1992, Chapman & Hall (London), Chapters 13 and 14.

A step common to manufacture of all leaf teas is a drying step. In the case of oolong and black leaf tea, the drying step usually also serves to deactivate the fermentation enzymes. Efficient drying requires high temperatures and so it is preferred that the process comprises drying the leaf residue at a temperature of at least 75°C, more preferably at least 90°C.

It is preferred that the process comprises sorting the leaf tea manufactured from the leaf residue, preferably after drying, to achieve a particle size of at least 35 mesh. More preferably the leaf tea is sorted to achieve a particle size of from 30 mesh to 3 mesh. Alternatively or additionally, the leaf tea may be sorted to achieve a leaf tea grade of Pekoe Fannings (PF) grade or larger, more preferably Orange Fannings (OF) or larger and most preferably Broken Orange Pekoe Fannings (BOPF) or larger.

### EXAMPLES

The present invention will be further described with reference to the following examples.

### Example 1

This Example demonstrates the production of a black tea juice useful for the present invention.

### Preparation and Fermentation of Dhool

Fresh Kenyan tea leaves (two leaves and a bud) of *Camellia sinensis* var. *assamica* were used. The catechin content of the unmacerated leaves was about 15% by weight. The fresh tea leaves were chopped using a vegetable cutter before being fed twice through a CTC (cut, tear, curl) machine (Rollers set at six teeth per inch with speeds of 1000 and 100 rpm respectively). The fresh dhool was then fermented for 2 hours at a temperature of 25°C using a Teacraft^{™} fermentation unit (0.5°C wet bulb depression, 90% R.H.).

### Pressing

The fermented dhool was pressed to yield black tea juice. Pressing was done using a hydraulic press (5 Tonnes applied to a 500 g mass of fermented leaf inside a cylinder of diameter 160 mm, resulting in a downward pressure of 354 psi (2.44 MPa)) to express black tea juice. The tea juice was immediately centrifuged for 20 minutes (10000 g at 3°C) and the supernatant was then filter-sterilised using a Nalgene^{™} filtration unit fitted with a 0.2 µm filter.

### Production of Reference Infusion

A portion of the dhool which had been fermented for 2 hours but which had not been pressed was broken up by hand and then dried using a fluidized bed drier (ten minutes at an inlet air temperature of 120°C, followed by ten minutes at an inlet air temperature of 90°C) to obtain a made black tea (black leaf tea) with moisture content of 3% by weight. An infusion of 2 g of this leaf tea was prepared by infusing 2 g of the tea in 200 ml freshly boiled water for 2 minutes.

### Results

Table 1 shows the composition of the theaflavins in the tea juice and the reference infusion.

**TABLE 1**

| | **Juice** | **Ref. Infusion** |
|---|---|---|
| TF1 (mg/ml) | 0.150 | 0.019 |
| TF2 (mg/ml) | 0.074 | 0.017 |
| TF3 (mg/ml) | 0.057 | 0.013 |
| TF4 (mg/ml) | 0.040 | 0.012 |
| TF1/TF4 | 3.73 | 1.58 |
| %TF1 in Theaflavins | 46.7 | 30.6 |

This data shows that the proportion of gallated species in the theaflavins of tea black juice is low compared with the reference infusion.

### Example 2

This Example demonstrates the production of a green tea juice useful for the present invention.

### Production of Juice

Fresh Kenyan tea leaves (which had a catechin content of around 15% by dry weight) of *Camellia Sinensis* var. *assamica* were steamed for 60 seconds at ~100°C to inactivate endogenous enzymes and thus prevent fermentation. The steamed leaves, cooled to room temperature, were chopped using a vegetable cutter to yield chopped leaf of average size of around 0.5 to 1 cm². The chopped leaves were then pressed using a screw press (Vincent horizontal continuous press model CP4, Vincent Corp., Tampa, Florida, USA) operating with a back-pressure of 80 psi (0.55 MPa). The resulting yield of juice was 50 ml/100 g leaves. The tea juice was immediately centrifuged for 20 minutes (10000 g at 3°C) and the supernatant was then filter sterilised using a Nalgene^{™} filtration unit fitted with a 0.2 µm filter.

### Production of Reference Infusion

A portion of the chopped leaves which had not been pressed was dried using a fluidized bed drier (ten minutes at an inlet air temperature of 120°C, followed by ten minutes at an inlet air temperature of 90°C) to obtain a made green tea (green leaf tea) with moisture content of 9% by weight. An infusion of 2 g of this leaf tea was prepared by infusing 2 g of the tea in 200 ml freshly boiled water for 2 minutes.

### Results

Table 2 shows the composition of the catechins in the tea juice and the reference infusion.

**TABLE 2**

| | **Juice** | **Ref. Infusion** |
|---|---|---|
| EGC (mg/ml) | 9.51 | 0.256 |
| C (mg/ml) | 0.77 | 0.025 |
| EC (mg/ml) | 3.05 | 0.081 |
| EGCG (mg/ml) | 5.39 | 0.194 |
| ECG (mg/ml) | 2.01 | 0.081 |
| (EGC+C+EC)/(EGCG + ECG) | 1.80 | 1.32 |

This data shows that the proportion of gallated species in the catechins of green tea juice is low compared with the reference infusion.

### Example 3

This Example demonstrates the effect of damaging fresh leaves prior to expression on the composition of the tea juice pressed from the leaves.

A batch of fresh leaves (two leaves and a bud) of *Camellia Sinensis* var. *assamica* was split into three samples. Sample A was chopped using a vegetable cutter and then juice expressed using a hydraulic press. Sample B was minced using a Porkert^{™} 10 hand meat mincer and then juice expressed using the hydraulic press. Sample C was blast frozen, stored at -80°C for 12 hours, thawed, chopped with the vegetable cutter and then juice expressed using the hydraulic press.

Table 3 shows the weight ratio of non-gallated to gallated catechins in the juice expressed from each sample.

**TABLE 3**

| **Sample** | **Pre-treatment** | **Non-gallated / gallated catechins** |
|---|---|---|
| A | Chop | 16.9 |
| B | Mince | 1.84 |
| C | Freeze-thaw + Chop | 2.50 |

These results show that excessive damage (e.g., brought about by mincing or freeze-thawing) to the leaves prior to expression results in a decrease in the ratio of non-gallated to gallated polyphenols.

### Example 4

This Example demonstrates consumer testing of a tea beverage comprising a mixture of tea solids from tea juice and leaf tea.

### Conventional tea beverages

Conventional tea beverages were made by infusing 10 bags of black leaf tea in 2 litres of freshly boiled water for 40 seconds. At the end of the 40 seconds the liquor was stirred three times and the bags were squeezed once against the side of the container and removed from the liquor. The leaf tea was either a commercial blend (PG Tips^{®} produced by Unilever UK Ltd - Beverage I) or a Kenyan CTC black leaf tea (Beverage II). Each infusion had a tea solids content of about 2.8 mg / ml. The liquor was portioned into 200 ml mugs for tasting.

### Tea juice beverage

Each beverage was made by accurately pipetting either 4 or 8 ml of black tea juice (solids content of about 7 wt%) into a mug, pouring 200 ml freshly boiled water into the mug and then stirring well. Thus the beverages made with 4 ml juice (Beverage III) had a tea solids content of about 1.4 mg / ml and those with 8 ml juice (Beverage IV) had a tea solids content of about 2.8 mg / ml.

### Beverage with tea solids from juice and made tea

A beverage (Beverage V) according to the invention was prepared by brewing 5 bags of PG Tips^{®} in 2 litres of boiled water for 40 seconds. At the end of the 40 seconds the liquor was stirred three times and the bags were squeezed once against the side of the container and removed from the liquor. 40 ml of black tea juice was then added to the liquor and stirred. The liquor had a tea solids content of about 2.8 mg / ml with approximately equal amounts being provided by the leaf tea and the juice. The liquor was portioned into 200 ml mugs for tasting.

### Consumer Testing

A group of 8 consumers from the UK were served beverages I, II and V and asked to score them for preference (Most preferred = 1 point, 2^{nd} most preferred = 2 points and least preferred = 3 points). The results are shown in table 4.

**TABLE 4**

| **Beverage** | **Origin of Tea Solids** | **Total Preference Score** |
|---|---|---|
| I | Leaf Tea Blend | 16 |
| II | Kenyan Leaf Tea | 20 |
| V | Leaf Tea Blend + Juice | 12 |

These results illustrate that, surprisingly, the consumers preferred the beverage comprising tea solids derived from both made tea and tea juice over those from made tea alone.

A separate group of 7 consumers from the UK were served beverages I, III, IV and V and asked to score them for preference (Most preferred = 1 point to least preferred = 4 points). The results are shown in table 5.

**TABLE 5**

| **Beverage** | **Origin of Tea Solids** | **Total Preference Score** |
|---|---|---|
| I | Leaf Tea Blend | 24 |
| III | 4 ml Juice | 21 |
| IV | 8 ml Juice | 10 |
| V | Leaf Tea Blend + Juice | 15 |

These results illustrate that the most preferred beverage was that made from a high level of juice solids, closely followed by the beverage comprising solids from both made tea and juice.

## Claims

1. A process for manufacturing a tea product, the process comprising the step of combining tea juice expressed from a first supply of fresh tea leaves with leaf tea from a second supply of fresh tea leaves and/or with tea solids extracted from the leaf tea.

2. A process according to claim 1, the process comprising the steps of:
a) providing the first and second supply of fresh tea leaves;
b) expressing juice from the first supply of fresh tea leaves thereby to produce the tea juice and a leaf residue;
c) processing the second supply of fresh tea leaves to produce the leaf tea comprising the tea solids; and then
d) combining the juice from step (b) with the leaf tea and/or tea solids from step (c).

3. A process according to claim 1 or claim 2 wherein the tea juice is combined with the leaf tea to form a mixture and the mixture is dried.

4. A process according to claim 1 or claim 2 wherein the tea juice is combined with a tea beverage comprising the tea solids extracted from the leaf tea.

5. A process according to claim 1 or claim 2 wherein the tea juice is combined with a powder or liquid concentrate comprising the tea solids extracted from the leaf tea.

6. A process according to any one of the preceding claims wherein the tea product comprises water-soluble tea solids derived from the tea juice and water-soluble tea solids derived from the leaf tea in a weight ratio of from 5:1 to 1:5.

7. A process according to any one of the preceding claims wherein the tea juice is black tea juice.

8. A process according to claim 7 wherein the tea juice comprises theaflavins, wherein the theaflavins comprise theaflavin (TF1) and theaflavin digallate (TF4) and wherein the weight ratio of theaflavin to theaflavin digallate (TF1/TF4) is at least 2.0.

9. A process according to any one of claims 1 to 6 wherein the tea juice is green tea juice.

10. A process according to claim 9 wherein the tea juice comprises non-gallated catechins and gallated catechins in a weight ratio of 1.4:1 to 20:1.

11. A process according to any one of the preceding claims wherein the leaf tea is black leaf tea.

12. A process according to any one of claims 1 to 10 wherein the leaf tea is green leaf tea.

13. A process according to any one of claims 2 to 11 wherein the leaf residue from step (b) is processed to produce leaf tea.

14. A tea product obtainable by the process of any one of claims 1 to 12.

## Patentansprüche

1. Verfahren zur Herstellung eines Tee-Produkts, wobei das Verfahren die Schritte Kombinieren von Tee-Saft, der aus einer ersten Zuführung von frischen Tee-Blättern ausgepresst wurde, mit Blatt-Tee aus einer zweiten Zuführung von frischen Tee-Blättern und/oder mit Tee-Feststoffen, die aus dem Blatt-Tee extrahiert wurden, umfasst.

2. Verfahren gemäß Anspruch 1, wobei das Verfahren die Schritte:
a) Bereitstellen der ersten und zweiten Zuführung von frischen Tee-Blättern;
b) Auspressen von Saft aus der ersten Zuführung von frischen Tee-Blättern, um **dadurch** den Tee-Saft und einen Blattrückstand zu produzieren;
c) Verarbeiten der zweiten Zuführung von frischen Tee-Blättern, um den Blatt-Tee herzustellen, der die Tee-Feststoffe umfasst, und danach
d) Kombinieren des Safts aus Schritt b) mit dem Blatt-Tee und/oder Tee-Feststoffen aus Schritt c).

3. Verfahren gemäß Anspruch 1 oder Anspruch 2, wobei der Tee-Saft mit dem Blatt-Tee unter Bildung eines Gemisches kombiniert wird und das Gemisch getrocknet wird.

4. Verfahren gemäß Anspruch 1 oder Anspruch 2, wobei der Tee-Saft mit einem Tee-Getränk, welches die aus dem Blatt-Tee extrahierten Tee-Feststoffe umfasst, kombiniert wird.

5. Verfahren gemäß Anspruch 1 oder Anspruch 2, wobei der Tee-Saft mit einem Pulver- oder Flüssigkeitskonzentrat kombiniert wird, welches die aus dem Blatt-Tee extrahierten Tee-Feststoffe umfasst.

6. Verfahren gemäß einem der vorangehenden Ansprüche, wobei das Tee-Produkt wasserlösliche Tee-Feststoffe, die aus dem Tee-Saft stammen, und wasserlösliche Tee-Feststoffe, die aus dem Blatt-Tee stammen, in einem Gewichtsverhältnis von 5:1 bis 1:5 umfasst.

7. Verfahren gemäß einem der vorangehenden Ansprüche, wobei der Tee-Saft schwarzer Tee-Saft ist.

8. Verfahren gemäß Anspruch 7, wobei der Tee-Saft Theaflavine umfasst, wobei die Theaflavine Theaflavin (TF1) und Theaflavindigallat (TF4) umfassen und wobei das Gewichtsverhältnis von Theaflavin zu Theaflavindigallat (TF1/TF4) wenigstens 2,0 ist.

9. Verfahren gemäß einem der Ansprüche 1 bis 6, wobei der Tee-Saft grüner Tee-Saft ist.

10. Verfahren gemäß Anspruch 9, wobei der Tee-Saft nicht-gallatierte Catechine und gallatierte Catechine in einem Gewichtsverhältnis von 1,4:1 bis 20:1 umfasst.

11. Verfahren gemäß einem der vorangehenden Ansprüche, wobei der Blatt-Tee schwarzer Blatt-Tee ist.

12. Verfahren gemäß einem der Ansprüche 1 bis 10, wobei der Blatt-Tee grüner Blatt-Tee ist.

13. Verfahren gemäß einem der Ansprüche 2 bis 11, wobei der Blattrückstand aus Schritt (b) unter Herstellung von Blatt-Tee verarbeitet wird.

14. Tee-Produkt, erhältlich durch das Verfahren gemäß einem der Ansprüche 1 bis 12.

## Revendications

1. Procédé de fabrication d'un produit de thé, le procédé comprenant l'étape de combinaison d'un jus de thé exprimé à partir d'un premier apport de feuilles de thé fraîches avec du thé en feuilles provenant d'un second apport de feuilles de thé fraîches et/ou avec de la matière sèche de thé extraite du thé en feuilles.

2. Procédé selon la revendication 1, dans lequel le procédé comprend les étapes consistant à :
a) fournir le premier et le second apport de feuilles de thé fraîches ;
b) exprimer un jus du premier apport de feuilles de thé fraîches pour produire ainsi le jus de thé et un résidu de feuille ;
c) traiter le second apport de feuilles de thé fraîches pour produire le thé en feuilles comprenant la matière sèche de thé ; puis
d) combiner le jus provenant de l'étape b) avec le thé en feuilles et/ou la matière sèche de thé provenant de l'étape c).

3. Procédé selon la revendication 1 ou la revendication 2, dans lequel le jus de thé est combiné avec le thé en feuilles pour former un mélange et le mélange est séché.

4. Procédé selon la revendication 1 ou la revendication 2, dans lequel le jus de thé est combiné avec une boisson de thé comprenant la matière sèche de thé extraite du thé en feuilles.

5. Procédé selon la revendication 1 ou la revendication 2, dans lequel le jus de thé est combiné avec un concentré en poudre ou liquide comprenant la matière sèche de thé extraite du thé en feuilles.

6. Procédé selon l'une quelconque des revendications précédentes, dans lequel le produit de thé comprend de la matière sèche de thé soluble dans l'eau dérivée du us de thé et de la matière sèche de thé soluble dans l'eau dérivée du thé en feuilles dans un rapport en poids de 5 : 1 à 1 : 5.

7. Procédé selon l'une quelconque des revendications précédentes, dans lequel le jus de thé est du jus de thé noir.

8. Procédé selon la revendication 7, dans lequel le jus de thé comprend des théaflavines, où les théaflavines comprennent de la théaflavine (TF1) et du digallate de théaflavine (TF4) et où le rapport en poids entre théaflavine et digallate de théaflavine (TF1/TF4) est d'au moins 2,0.

9. Procédé selon l'une quelconque des revendications 1 à 6, dans lequel le jus de thé est du jus de thé vert.

10. Procédé selon la revendication 9, dans lequel le jus de thé comprend des catéchines non gallatées et des catéchines gallatées dans un rapport en poids de 1,4 : 1 à 20 : 1.

11. Procédé selon l'une quelconque des revendications précédentes, dans lequel le thé en feuilles est du thé en feuilles noir.

12. Procédé selon l'une quelconque des revendications 1 à 10, dans lequel le thé en feuilles est du thé en feuilles vert.

13. Procédé selon l'une quelconque des revendications 2 à 11, dans lequel le résidu de feuille provenant de l'étape (b) est traité pour produire du thé en feuilles.

14. Produit de thé pouvant être obtenu par le procédé de l'une quelconque des revendications 1 à 12.
